# EUROPÄISCHE PATENTSCHRIFT

(11) **EP 1 404 976 B1**
(45) Veröffentlichungstag und Bekanntmachung des Hinweises auf die Patenterteilung: **30.03.2005**
(21) Anmeldenummer: 02737637.5
(22) Anmeldetag: 23.01.2002
(51) Int. Cl.: F15B 1/00

(54) **HYDRAULISCHE BETÄTIGUNGSANORDNUNG UND HYDRAULISCH SPERRBARES RÜCKSCHLAGVENTIL**
HYDRAULIC ACTUATING SYSTEM AND CHECK VALVE WHICH CAN BE HYDRAULICALLY BLOCKED
DISPOSITIF DE COMMANDE HYDRAULIQUE ET CLAPET ANTI-RETOUR A BLOCAGE HYDRAULIQUE

(30) Priorität: 29.01.2001 AT 1622001
(43) Veröffentlichungstag der Anmeldung: 07.04.2004
(73) Patentinhaber: Hoerbiger Automatisierungstechnik Holding GmbH, 86972 Altenstadt (DE)
(72) Erfinder: STOLLE, Klaus, 86972 Schwabniederhofen (DE)
(74) Vertreter: Laminger, Norbert, Mag.
(86) Internationale Anmeldenummer: PCT/IB2002/001478
(87) Internationale Veröffentlichungsnummer: WO 2002/061288

(56) Entgegenhaltungen:
- EP-A- 0 803 630
- EP-A- 0 959 216
- EP-A- 0 994 261
- DE-A- 2 358 969
- FR-A- 1 358 512
- US-A- 4 485 724
- US-A- 4 869 458

## Beschreibung

Die Erfindung betrifft eine hydraulische Betätigungsanordnung, mit einer Pumpe, welche über Hydraulikleitungen, eine davon allenfalls mit einem entsperrbaren Rückschlagventil versehen, mit den Arbeitsräumen zumindest zweier doppeltwirkenden Kolben-Zylinder-Anordnungen verbunden ist.

Aus der AT 396.613 B ist eine Betätigungsanordnung für Fahrzeugverdecke bekannt, bei der die stangenseitigen und kolbenseitigen Arbeitsräume zweier Kolben-Zylinder-Anordnungen von den beiden Ausgängen einer reversiblen Pumpe angesteuert werden, um das Verdeck aus- oder einzufahren. Die unterschiedlichen Volumina werden über ein Wechselventil gesteuert aus dem Reservoir des Hydraulikmediums ausgeglichen. Zur Realisierung einer Nothaltefunktion, welche je nach Bedarf auf einer oder auch beiden Seiten vorgesehen sein kann, ist ein Rückschlagventil in eine der Hydraulikleitungen eingesetzt. Diese Rückschlagventil ist im durch den Druck im System bei Normalbetrieb entsperrt.

Vermehrt wird nun zusätzlich zur Betätigung des Verdecks selbst eine automatische Betätigung der Abdeckung des Verdecks und/oder von dessen Verriegelung gewünscht. Dazu sind weitere Kolben-Zylinder-Anordnungen vorgesehen, die entweder über einen weiteren, separaten Hydraulikkreis versorgt werden oder über geeignete Leitungen, Ventil- und Steueranordnungen, usw. von der Hauptpumpe des Systems angesteuert werden. Beide Varianten erfordern einen relativ großen Aufwand auf apparativer und steuerungstechnischer Seite und erhöhen das Gewicht der Anlage sowie deren Kosten.

In der AT 406.072 B ist darauf aufbauend eine hydraulische Betätigungsanordnung offengelegt, bei der in einfacher Art und Weise bei geringem baulichem und steuerungstechnischem Aufwand eine sehr flexible Versorgung und Ansteuerung voneinander unabhängig zu betätigender Kolben-Zylinder-Anordnungen möglich ist. Dazu zweigen von beiden Ausgangsleitungen der reversiblen Pumpe zusätzliche Hydraulikleitungen ab, in die Rückschlagventile eingesetzt sind, welche zusätzliche Hydraulikleitungen in eine gemeinsame Hydraulikleitung zu zumindest einer weiteren Kolben-Zylinder-Anordnung münden. Dadurch steht immer, unabhängig von der Drehrichtung der reversiblen Pumpe und daher der Bewegung der ersten Kolben-Zylinder-Anordnung, etwa zur Bewegung des Verdecks selbst, unter Druck stehendes Hydraulikmedium für die Ansteuerung der weiteren Kolben-Zylinder-Einheit, etwa zur Bewegung der Abdeckklappe und/oder allfälliger Verschlusszylinder, zur Verfügung, ohne dass ein weiterer vollständiger Hydraulikkreis oder aufwendige Steuerventil-Anordnungen notwendig sind.

Um bei dieser bekannten Anordnung eine manuelle Notbetätigung der weiteren Kolben-Zylinder-Anordnung bzw. von den normalerweise davon bewegten Bauteilen zu gestatten, beispielsweise im Zuge des Öffnens und/oder Schließens des Verdecks, zweigt von der gemeinsamen Hydraulikleitung eine absperrbare Ableitung in das Reservoir ab, in welche eine Drossel eingesetzt ist. Bei einem Ausfall des hydraulischen Systems und beispielsweise manuellem Öffnen der Ableitung können die betroffenen, beispielsweise durch ihr Gewicht belasteten Bauteile gegen den Widerstand der Drossel langsam in ihre Ruhelage zurücksinken. Diese Art der Entsperrung des Notventils erfordert aber - bei einem System in dem eine weitestgehende Automatisierung aller Vorgänge das Ziel ist - eine manuelle Betätigung durch den Benutzer. Das Bedienungselement für die manuelle Entsperrung kann aufgrund baulicher Anforderungen - etwa dem sehr begrenzten Platzangebot in Cabriolets zufolge -oft sehr schlecht zugänglich positioniert werden. Auch elektrisch (fem)betätigbare Notventile mit gleicher Funktion sind vorgeschlagen worden, was aber einen erhöhten steuerungstechnischen Aufwand bedeutet und eine größere Auslegung der elektrischen Anlage nötig macht. Überdies kann durch Störungen der Elektrik auch das Schalten des Notventils auf Durchlassstellung und damit die Notbetätigung des Verdecks und der dazugehörigen Bauteile in Frage gestellt sein.

Es war daher die Aufgabe der vorliegenden Erfindung, eine Betätigungsanordnung der eingangs angegebenen Art und für beliebige Anwendungsgebiete, vorzugsweise aber für die Betätigung von Fahrzeugverdecken und damit zusammenhängenden Bauteilen, derart zu verbessern, dass mit geringem baulichen Aufwand und geringstem Platzbedarf sowie Gewicht eine automatische Absteuerung und Entspannung des Arbeitsmediums in den Kolben-Zylinder-Anordnungen und damit eine manuelle Notbetätigung der Anordnung, insbesonders des Verdeckes, seiner Abdeckklappen, Schlösser und dgl., ermöglicht ist. Eine weitere Aufgabe der vorliegenden Erfindung war die Ausgestaltung der Anordnung mit einem einfachen und möglichst robusten, funktionssicheren Rückschlagventil, das über zumindest zwei Steuerleitungen in ODER-Schaltung hydraulisch gesperrt werden kann und das sich besonders zum Einbau als Notventil in die hydraulische Betätigungsanordnung eignet.

Zur Lösung der Aufgabe ist erfindungsgemäß vorgesehen, dass die Kolben-Zylinder-Anordnungen über ein hydraulisch sperrbares Notventil mit einem Druckentspannungsraum verbunden sind, dass von zumindest einer der Hydraulikleitungen unmittelbar nach der Pumpe und von zumindest einer weiteren Stelle zwischen Pumpe und zumindest einer der Kolben-Zylinder-Anordnungen zumindest zwei Steuerleitungen abzweigen und mit dem automatischen Notventil derart verbunden sind, dass für das Sperren des Notventils eine ODER-Schaltung realisiert ist. Durch diese Merkmale ist in einfacher und funktionssicherer Weise - und mit einer Anordnung ohne zusätzlichem Platzbedarf, Gewicht und Energiebedarf für ein elektrisches Notventil - gewährleistet, dass das Notventil immer geschlossen ist - und somit die volle Funktionalität der Betätigungsanordnung mit ihren Kolben-Zylinder-Anordnungen, Schalt- und sonstigen Ventilen und dgl. gegeben ist - wenn die Pumpe läuft und entsprechender Druck im System aufgebaut ist. Sollte aber der Druck durch Ausfall oder Stoppen der Pumpe nicht mehr aufrecht sein und gleichzeitig auch an keiner Stelle der Betätigungsanordnung, von welcher eine Steuerleitung zum Notventil abzweigt, durch wie auch immer geartete Einrichtungen aufrechterhalten sein, wird das Notventil dadurch entsperrt, der Druck des Arbeitsmediums in den Arbeitsräumen der Kolben-Zylinder-Anordnung kann abgebaut und die Betätigungsanordnung somit per Hand notbetätigt werden. Dabei ist durch die zwei oder mehrwertige ODER-Logik am Notventil sichergestellt, dass eine manuelle Betätigung nur dann erfolgen kann - dann aber ohne weitere Bedienungsanforderung durch den Benutzer - ,wenn an keiner Stelle im System mehr Druck vorhanden ist, der die manuelle Betätigung ver- oder behindert, oder zu Behinderungen von manuell betätigbaren Bauteilen durch gesperrte Bauteile führt.

In gleicher Weise können die oben genannten Effekte und Vorteile auch dann realisiert werden, wenn die Pumpe reversibel ausgeführt ist und von beiden Seiten der reversiblen Pumpe Steuerleitungen zum Notventil führen. Solange die Pumpe arbeitet und somit auf einer ihrer Seiten Druck aufgebaut ist, bleibt das Notventil automatisch hydraulisch gesperrt. Erst bei einem völligen Ausfall der Pumpe - und gleichzeitiger Drucklosigkeit an den Abzweigstellen der übrigen Steuerleitungen - wird das Notventil automatisch entsperrt, um die manuelle Betätigung des Systems zu ermöglichen.

Die am Notventil erwünschte ODER-Logik für die Steuerleitungen kann nicht nur im Notventil selbst implementiert sein, sondern kann auch durch externe Bauteile realisiert sein. Gemäß einem weiteren Merkmal der Erfindung können dazu - beispielsweise bei reversibel ausgeführter Pumpe von beiden Seiten der reversiblen Pumpe - Steuerleitungen zu beiden Eingängen eines Wechselventils führen, von dessen Ausgang eine weitere Steuerleitung zum Notventil führt.

Eine spezielle Anordnung mit einfacher Ansteuerung zumindest einer Kolben-Zylinder-Anordnung und integrierter automatischer Notbetätigungs-Funktionalität ist erfindungsgemäß dadurch gegeben, dass zumindest eine differentiell arbeitende Kolben-Zylinder-Anordnung vorgesehen und mit der Pumpe über zumindest ein Schaltventil verbunden ist, wobei eine Steuerleitung zum Notventil zwischen dem Schaltventil und der differentiell arbeitenden Kolben-Zylinder-Anordnung abzweigt. Sobald - im Kombination mit einem Ausfall oder Anhalten der Pumpe des Systems - der Druck für die Ansteuerung der differentiell arbeitenden Kolben-Zylinder-Anordnung nicht mehr aufrecht ist, wird automatisch das Notventil entsperrt und erlaubt für die gesamten Betätigungsanordnung die manuelle Notbetätigung.

Eine besonders vorteilhafte Anwendung findet die oben in allgemeinen Zügen erläuterte Anordnung für ein Fahrzeugverdeck, mit zumindest einer doppeltwirkenden Kolben-Zylinder-Anordnung zur Betätigung des Verdeckes, deren Arbeitsräume mit je einer Seite einer reversiblen Pumpe über Hydraulikleitungen verbunden sind, mit zumindest einer weiteren Kolben-Zylinder-Anordnung zur Betätigung von Abdeckklappen, Schlössern od. dgl. des Verdecks, welche weitere Kolben-Zylinder-Anordnung differentiell über eine Hydraulikleitung und ein Schaltventil angesteuert wird, wobei die Hydraulikleitung mit beiden Seiten der reversiblen Pumpe verbunden ist, vorzugsweise über zumindest ein Rückschlagventil. Dabei ist diese Betätigungsanordnung für eine Fahrzeugverdeck gemäß einem weiteren Merkmal der Erfindung dadurch gekennzeichnet, dass von beiden Seiten der reversiblen Pumpe und von einer Stelle zwischen dem kolbenseitigen Arbeitsraum der zumindest einer weiteren Kolben-Zylinder-Anordnung und dem Schaltventil jeweils eine Steuerleitung zum Notventil abzweigt

Wenn gemäß einem weiteren Merkmal der Erfindung das Notventil als hydraulisch sperrbares Rückschlagventil ausgeführt und vom Druckentspannungsraum in Richtung Kolben-Zylinder-Anordnungen hin automatisch sperrend eingebaut ist, kann das automatische Sperren ohne Fremdenergie durch den im System ohnedies notwendigen hydraulischen Druck bzw. das Entsperren des Notventils durch dessen Abbau oder Abfall bewirkt werden. Dabei verhindert die Rückschlag-Funktionalität gleichzeitig nachteilige Rückwirkungen vom Druckentspannungsraum - vorteilhafterweise dem Reservoir oder Tank für das Hydraulikmedium - in das übrige System.

Die zusätzliche Aufgabe wird erfindungsgemäß durch eine Betätigungsanordnung mit einem als Notventil eingesetzten Rückschlagventil mit einem Ventilsitz und einem damit zusammenwirkenden Dichtelement gelöst, dessen zumindest ein Kolben verschiebbar und dabei das Dichtelement in Schließrichtung mit einer Kraft beaufschlagend im Gehäuse des Rückschlagventils geführt und über einen hydraulischen Steuereingang mit Druck beaufschlagbar ist.

Gemäß einem weiteren Merkmal der Erfindung ist vorgesehen, dass zumindest zwei Kolben verschiebbar im Gehäuse des Rückschlagventils geführt sind, wobei einer der Kolben im Zuge seiner Verschiebung das Dichtelement in Schließrichtung mit einer Kraft beaufschlagt, und wobei jeder Kolben über einen hydraulischen Steuereingang mit Druck beaufschlagbar ist. Mit dieser Konstruktion ist auf einfache und sehr funktionssichere Weise ohne Notwendigkeit weiterer externer Bauteile eine ODER-Logik zwischen allen Steuereingängen realisiert.

Konstruktiv sehr einfach ausgeführt ist dieses Rückschlagventil in einer Ausführungsform, bei der die Kolben in einer Linie hintereinander angeordnet sind, wobei einer der Kolben das Dichtelement beaufschlagt und die übrigen Kolben den jeweils vorhergehenden Kolben.

In der nachfolgenden Beschreibung soll die Erfindung anhand zweier spezieller Ausführungsbeispiele und unter Bezugnahme auf die beigefügten Zeichnungen näher erläutert werden.

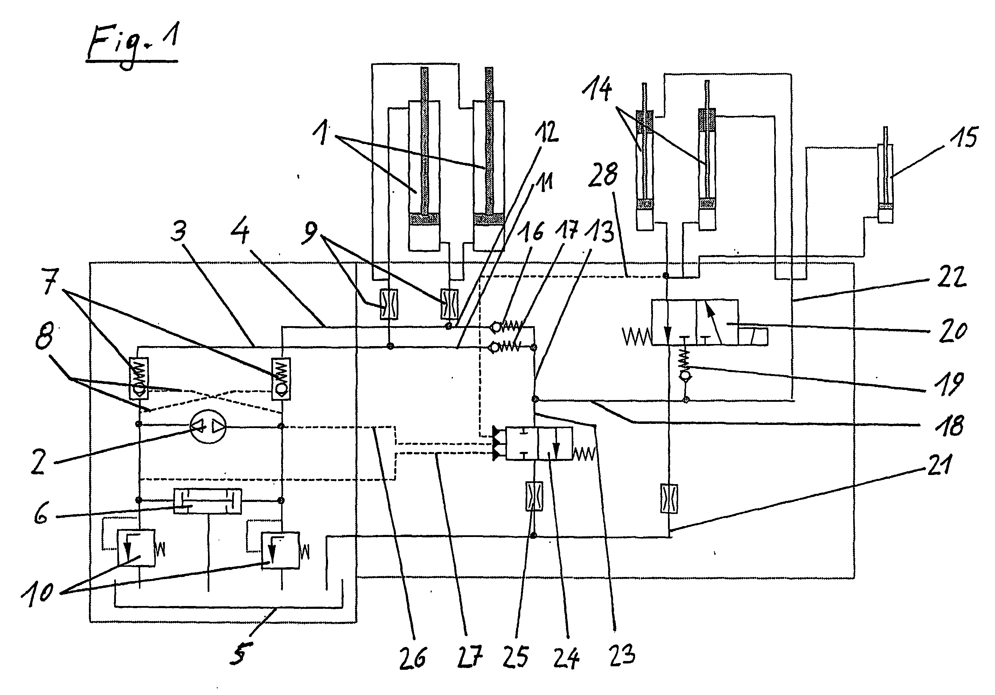

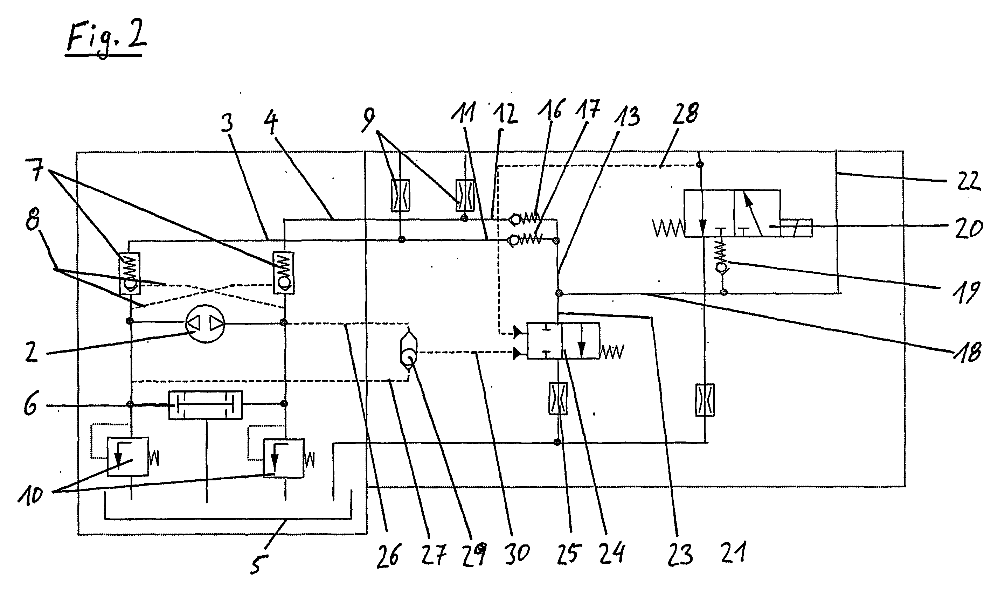

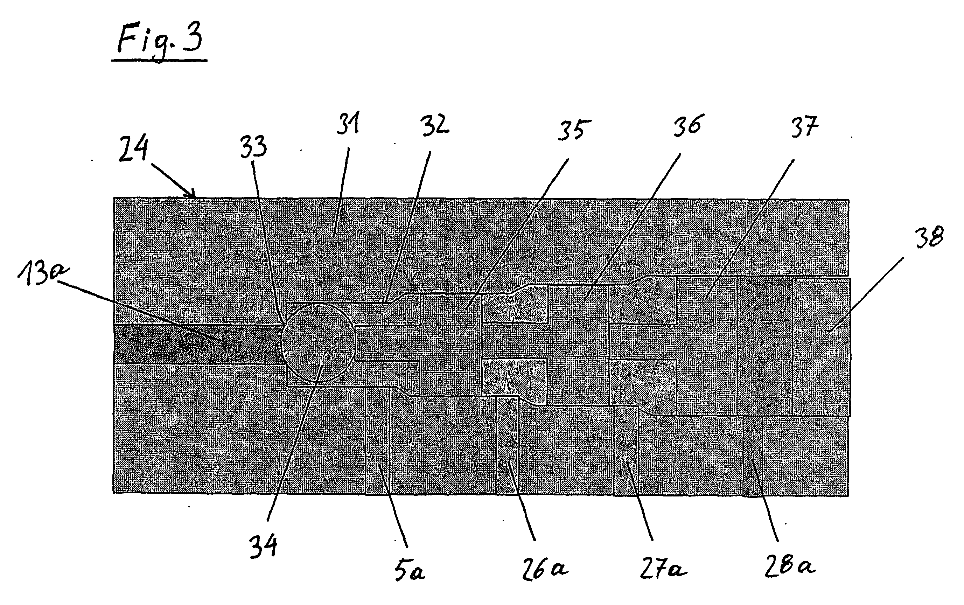

Dabei zeigt die Fig. 1 einen hydraulischen Schaltplan für beispielsweise eine hydraulische Betätigungsanordnung eines Fahrzeugverdecks mit mehreren zum Teil unabhängig voneinander arbeitenden Kolben-Zylinder-Anordnungen, Fig. 2 ist eine Abänderung des Schaltplanes der Fig. 1 mit einer anderen erfindungsgemäßen Ansteuerungsvariante für das Notventil, und Fig. 3 zeigt einen schematischen Längsschnitt durch ein erfindungsgemäßes hydraulisch sperrbares Rückschlagventil, das vorteilhafterweise in den erfindungsgemäßen Betätigungsanordnungen eingesetzt werden kann.

Beispielsweise zwei doppeltwirkende hydraulische Kolben-Zylinder-Anordnungen 1 dienen zur hydraulischen Betätigung der Hauptkomponente des Systems, etwa des Verdecks eines Fahrzeuges. Sie werden von einer reversiblen Pumpe 2 mit vorzugsweise Hydrauliköl versorgt, das den Stangenseiten der Kolben-Zylinder-Anordnungen 1 über eine Hydraulikleitung 3 und den Kolbenseiten über eine Hydraulikleitung 4 zugeführt wird. Zum Ausgleich der unterschiedlichen Volumina von Kolben- und Stangenseite wird Hydrauliköl aus dem Reservoir 5 über das Wechselventil 6 angesaugt oder abgesteuert. Die Rückschlagventile 7 in den Hydraulikleitungen 3, 4 zur Stangen- als auch Kolbenseite der Kolben-Zylinder-Anordnungen 1 sorgen für die Nothaltefunktion bei Ausfall des Hydrauliksystems und sind bei Normalbetrieb über die Steuerleitungen 8 entsperrt. Schließlich sind noch zwei Drosseln 9 in die Hydraulikleitungen 3, 4 eingesetzt und zwei in das Reservoir 5 absteuemde Vorspann-Ventile 10 zur Einstellung des Maximaldrucks auf der Kolben- bzw. Stangenseite der Kolben-Zylinder-Anordnungen 1.

Um nun zusätzlich zum Verdeck selbst auch beispielsweise dessen Abdeckklappe und Verriegelungen hydraulisch betätigen zu können, zweigt von jeder Hydraulikleitung 3 bzw. 4 je eine weitere Hydraulikleitung 11 und 12 ab, welche sich dann zu einer gemeinsamen Hydraulikleitung 13 vereinigen, die die weiteren Kolben-Zylinder-Anordnungen 14 - für etwa die Verdeckklappe - und 15 - beispielsweise für deren Schloss - mit Hydraulikmedium versorgt. Durch die in Richtung auf die Pumpe 2 gesperrten Rückschlagventile 16 und 17 in den weiteren Hydraulikleitungen 11, 12 wird sichergestellt, dass unabhängig von der Drehrichtung der Pumpe 2 die Hydraulikleitung 13 immer mit Druck beaufschlagt ist.

Die Kolbenseiten der weiteren Kolben-Zylinder-Anordnungen 14 und 15 werden über eine von der gemeinsamen Hydraulikleitung 12 abzweigenden Zuleitung 18 mit eingebautem Rückschlagventil 19 zur Erzielung einer Nothaltefunktion versorgt, wobei die Ansteuerung über das vorzugsweise elektrisch betätigte Umschaltventil 20, vorzugsweise ein 3/2-Wege-Ventil, erfolgt. Dieses Umschaltventil 20 steuert in der dargestellten Stellung die Kolbenseiten der Kolben-Zylinder-Anordnungen 14, 15 über die Leitung 21 in das Reservoir 5 ab, wobei durch das den Stangenseiten der Kolben-Zylinder-Anordnungen 14, 15 unabhängig vom Sinn der Betätigung der Kolben-Zylinder-Anordnungen 1 über die Zuleitung 22 zugeführte Hydraulikmedium die Kolbenstangen der Kolben-Zylinder-Anordnungen 14, 15 einfahren. In der zweiten - nicht dargestellten - Schaltstellung des Schaltventils 20 werden zusätzlich die Kolbenseiten mit Hydraulikmedium versorgt, wobei aufgrund des Unterschiedes in der wirksamen Fläche auf Kolben- bzw. Stangenseite die Kolben-Zylinder-Anordnungen 14, 15 differential ausfahren.

Von der gemeinsamen Hydraulikleitung 13 zweigt eine weitere Leitung 23 zum Reservoir 5 ab, in der ein Notventil 24 eingesetzt ist. Um bei einem Ausfall des hydraulischen Systems, d.h. hauptsächlich der Pumpe 2, die normalerweise automatisch betätigten Bauteile manuell bewegen zu können, kann das Hydraulikmedium von den Kolben-Zylinder-Anordnungen 14 und 15 sowie von beiden Arbeitsräumen der Kolben-Zylinder-Anordnungen 1 über das in diesem Fall freigeschaltete, d.h. entsperrte Notventil 24 und die allenfalls noch dahinter eingebaute Drossel 25 in das Reservoir 5 abgeleitet und der Druck damit abgebaut werden. Die Kolbenseiten der Kolben-Zylinder-Anordnungen 14, 15 sind typischerweise ohnedies über die Leitung 21 in das Reservoir 5 abgesteuert.

Das Notventil 24 soll beim normalen, automatischen Betrieb der Betätigungsanordnung in einfacher und automatischer Weise sicher gesperrt sein. Das wird erfindungsgemäß durch die Steuerleitungen 26, 27 und 28 gewährleistet, welche das Notventil 24 in einer Weise ansteuern, dass zwischen allen Steuerleitungen eine ODER-Logik realisiert ist. So zweigen im Beispiel der Fig. 1 die beiden Steuerleitungen 26, 27 unmittelbar nach der Pumpe 2 von den Hydraulikleitungen 3, 4 ab und führen von dort zum Notventil 24. Da aber auch die differentiell arbeitenden Kolben-Zylinder-Anordnungen 14, 15 drucklos sein müssen, um eine manuelle Notbetätigung des Systems ohne Störungen oder Beschädigungsgefahr vornehmen zu können, muss auch zumindest eine weitere Steuerleitung 28 zum Notventil 24 zwischen dem Schaltventil 20 und den differentiell arbeitenden Kolben-Zylinder-Anordnungen 14, 15 abzweigen und ebenfalls in die daher mehrwertige ODER-Logik - d.h. eine Logikschaltung, welche das Notventil 24 hydraulisch sperrt, solange nur eine der Steuerleitungen 26, 27, 28 unter Druck steht - integriert sein. Vorteilhafterweise geht dazu die Steuerleitung 28 von einer Stelle zwischen dem bzw. jedem kolbenseitigen Arbeitsraum der zumindest einer weiteren Kolben-Zylinder-Anordnung 14, 15 und dem Schaltventil 20 aus.

Eine andere mögliche Ausführungsform der erfindungsgemäßen Grundidee ist in Fig. 2 dargestellt, wobei der Einfachheit halber die Kolben-Zylinder-Anordnungen 1, 14 und 15 weggelassen wurden. Die Steuerleitung 28 verläuft wie oben beschrieben von einer Stelle zwischen dem bzw. jedem kolbenseitigen Arbeitsraum der zumindest einer weiteren Kolben-Zylinder-Anordnung 14, 15 und dem Schaltventil 20 zum Notventil 24. Die beiden Steuerleitungen 26, 27, welche unmittelbar nach der Pumpe 2 von den Hydraulikleitungen 3, 4 abzweigen, führen nun nicht direkt zum Notventil 24, sondern zu einem Wechselventil 29, in welchem eine erste Stufe der ODER-Logik zwischen den beiden Steuerleitungen 26 und 27 realisiert ist. Im Notventil 24 selbst ist dann eine weitere Stufe der insgesamt gesehen mehrwertigen ODER-Logik zwischen der vom Wechselventil 29 ausgehenden weiteren Steuerleitung 30 und der Steuerleitung 28 implementiert. Somit ist sichergestellt, dass das Notventil 24 hydraulisch gesperrt ist, solange nur eine der Steuerleitungen 26, 27, 28 unter Druck steht, und automatisch freigeschaltet ist, wenn an allen Abzweigungsstellen der Steuerleitungen 26, 27, 28 das System drucklos ist.

Ein hydraulisch sperrbares Rückschlagventil, insbesonders zur Verwendung in einer der oben beschriebenen oder einer ähnlichen erfindungsgemäßen Anordnung ist in Fig. 3 im schematischen Längsschnitt dargestellt. In einem Gehäuse 31 des als Notventil 24 einsetzbaren Rückschlagventils ist eine Längsbohrung 32 ausgearbeitet. Zwischen einem Eingangsanschluss 13a und einem Ausgang 5a, welche in der oben erläuterten Anordnung mit der Hydraulikleitung 13 bzw. der Ableitung zum Reservoir 5 verbunden sind, ist durch einen ersten Querschnittsflächensprung der Längsbohrung 32 ein Ventilsitz 33 definiert, mit welchem ein beispielsweise kugelförmiges Dichtelement 34 zusammenwirkt. In der Längsbohrung 32 sind nun hintereinander drei Kolben 35, 36, 37 verschiebbar angeordnet. Während ein Kolben 35 im Zuge seiner Verschiebung das Dichtelement 34 unmittelbar in Schließrichtung mit einer Kraft beaufschlagt, wirkt jeder nachfolgende Kolben 36, 37 immer auf den in Richtung Dichtelement 34 vorhergehenden Kolben ein. Da die Kolben 35, 36, 37 über die Anschlüsse 26a, 27a und 28a mit den Steuerleitungen 26, 27, 28 verbunden und mit Hydraulikmedium beaufschlagt werden können, ist zwischen diesen Leitungen aufgrund der beschriebenen Kolbenanordnung eine ODER-Logik realisiert.

Vorteilhafterweise kann - vom Dichtelement 34 ausgehend - jeder Kolben 35, 36, 37 eine andere, vorzugsweise größere Querschnittsfläche aufweisen. Die Längsbohrung 32 ist hinter dem letzten Kolben 37 bzw. dessen Arbeitsraum durch ein Verschlusselement 38 abgeschlossen.

Selbstverständlich können alle Bauteile des hydraulischen Systems, mit Ausnahme der Kolben-Zylinder-Anordnungen und der Hydraulikleitungen, in einer kompakten Einheit zusammengefasst und zentral im Fahrzeug eingebaut sein, wie dies durch die strichlierte Linie in Fig. 1 und 2 symbolisiert ist.

## Patentansprüche

1. Hydraulische Betätigungsanordnung, mit einer Pumpe (2), weiche über Hydraulikleitungen (3, 4), eine davon allenfalls mit einem entsperrbaren Rückschlagventil (7) versehen, mit den Arbeitsräumen zumindest zweier doppeltwirkenden Kolben-Zylinder-Anordnungen (1; 14, 15) verbunden ist, **dadurch gekennzeichnet, dass** die Kolben-Zylinder-Anordnungen (1; 14, 15) über ein hydraulisch sperrbares Notventil (24) mit einem Druckentspannungsraum (5) verbunden sind, dass von zumindest einer der Hydraulikleitungen (3, 4) unmittelbar nach der Pumpe (2) und von zumindest einer weiteren Stelle zwischen Pumpe und zumindest einer der Kolben-Zylinder-Anordnungen (14, 15) zumindest zwei Steuerleitungen (26, 27, 28) abzweigen und mit dem automatischen Notventil (24) derart verbunden sind, dass für das Sperren des Notventils eine ODER-Schaltung realisiert ist.

2. Anordnung nach Anspruch 1, **dadurch gekennzeichnet, dass** die Pumpe (2) reversibel ausgeführt ist und von beiden Seiten der reversiblen Pumpe (2) Steuerleitungen (26, 27) zum Notventil (24) führen.

3. Anordnung nach Anspruch 1 oder 2, **dadurch gekennzeichnet, dass** Steuerleitungen (26, 27) zu beiden Eingängen eines Wechselventils (29) führen, von dessen Ausgang eine weitere Steuerleitung (30) zum Notventil (24) führt.

4. Anordnung nach einem der Ansprüche 1 oder 2, **dadurch gekennzeichnet, dass** zumindest eine differentiell arbeitende Kolben-Zylinder-Anordnung (14, 15) vorgesehen und mit der Pumpe (2) über zumindest ein Schaltventil (20) verbunden ist, wobei eine Steuerleitung (28) zum Notventil (24) zwischen dem Schaltventil (20) und der differentiell arbeitenden Kolben-Zylinder-Anordnung (14, 15) abzweigt.

5. Anordnung nach einem der Ansprüche 1 bis 4 für ein Fahrzeugverdeck, mit zumindest einer doppeltwirkenden Kolben-Zylinder-Anordnung (1) zur Betätigung des Verdeckes, deren Arbeitsräume mit je einer Seite einer reversiblen Pumpe (2) über Hydraulikleitungen (3, 4) verbunden sind, mit zumindest einer weiteren Kolben-Zylinder-Anordnung (14, 15) zur Betätigung von Abdeckklappen, Schlössern od. dgl. des Verdecks, welche weitere Kolben-Zylinder-Anordnung (14, 15) differentiell über eine Hydraulikleitung (18) und ein Schaltventil (20) angesteuert wird, wobei die Hydraulikleitung (18) mit beiden Seiten der reversiblen Pumpe (2) verbunden ist, vorzugsweise über zumindest ein Rückschlagventil (16, 17), **dadurch gekennzeichnet, dass** von beiden Seiten der reversiblen Pumpe (2) und von einer Stelle zwischen dem kolbenseitigen Arbeitsraum der zumindest einer weiteren Kolben-Zylinder-Anordnung (14, 15) und dem Schaltventil (20) jeweils eine Steuerleitung (26, 27, 28) zum Notventil (24) abzweigt.

6. Anordnung nach einem der Ansprüche 1 bis 5, **dadurch gekennzeichnet, dass** das Notventil (24) als hydraulisch sperrbares Rückschlagventil ausgeführt und vom Druckentspannungsraum (5) in Richtung Kolben-Zylinder-Anordnungen (1; 14, 15) hin automatisch sperrend eingebaut ist.

7. Anordnung nach einem der Ansprüche 1 bis 6, **dadurch gekennzeichnet, daß** das Rückschlagventil (24) mit einem Ventilsitz (33) und einem damit zusammenwirkenden Dichtelement (34) versehen ist, wobei zumindest ein Kolben (35, 36, 37) verschiebbar und dabei das Dichtelement (34) in Schließrichtung mit einer Kraft beaufschlagend im Gehäuse (31) des Rückschlagventils geführt und über einen hydraulischen Steuereingang (26a, 27a, 28a) mit Druck beaufschlagbar ist.

8. Anordnung nach Anspruch 7, **dadurch gekennzeichnet, dass** zumindest zwei Kolben (35, 36, 37) verschiebbar im Gehäuse (31) des Rückschlagventils geführt sind, wobei zumindest einer der Kolben (35) im Zuge seiner Verschiebung das Dichtelement (34) in Schließrichtung mit einer Kraft beaufschlagt, und wobei jeder Kolben über einen hydraulischen Steuereingang mit Druck beaufschlagbar ist.

9. Anordnung nach Anspruch 8, **dadurch gekennzeichnet, dass** die Kolben (35, 36, 37) in einer Linie hintereinander angeordnet sind, wobei einer der Kolben (35) das Dichtelement (34) beaufschlagt und die übrigen Kolben (36, 37) den jeweils vorhergehenden Kolben (35, 36).

## Claims

1. An hydraulic actuating system, with a pump (2) which is connected to the operating chambers of at least two double-acting piston-cylinder arrangements (1; 14, 15) by way of hydraulic lines (3, 4), one of which is optionally provided with a pilot-controlled non-return valve (7), **characterized in that** the piston-cylinder arrangements (1; 14, 15) are connected to a pressure-relief chamber (5) by way of an hydraulically lockable emergency valve (24), and at least two control lines (26, 27, 28) branch off from at least one of the hydraulic lines (3, 4) immediately downstream of the pump (2) and from at least one further point between the pump and at least one of the piston-cylinder arrangements (14, 15) and are connected to the automatic emergency valve (24) in such a way that an OR circuit is formed for locking the emergency valve.

2. A system according to Claim 1, **characterized in that** the pump (2) is made reversible, and control lines (26, 27) lead from both sides of the reversible pump (2) to the emergency valve (24).

3. A system according to Claim 1 or 2, **characterized in that** control lines (26, 27) lead to both inlets of a change-over valve (29), from the outlet of which a further control line (30) leads to the emergency valve (24).

4. A system according to one of Claims 1 or 2, **characterized in that** at least one piston-cylinder arrangement (14, 15) operating differentially is provided and is connected to the pump (2) by way of at least one on-off valve (20), wherein a control line (28) to the emergency valve (24) branches off between the on-off valve (20) and the piston-cylinder arrangement (14, 15) operating differentially.

5. A system according to one of Claims 1 to 4 for a folding top of a vehicle, with at least one double-acting piston-cylinder arrangement (1) for actuating the folding top, the operating chambers of which are connected in each case to one side of a reversible pump (2) by way of hydraulic lines (3, 4), with at least one further piston-cylinder arrangement (14, 15) for actuating cover flaps, locks or the like of the folding top, which further piston-cylinder arrangement (14, 15) is controlled differentially by way of an hydraulic line (18) and an on-off valve (20), wherein the hydraulic line (18) is connected to both sides of the reversible pump (2), preferably by way of at least one non-return valve (16, 17), **characterized in that** one respective control line (26, 27, 28) to the emergency valve (24) branches off in each case from both sides of the reversible pump (2) and from a point between the operating chamber - on the piston side - of the at least one further piston-cylinder arrangement (14, 15) and the on-off valve (20).

6. A system according to one of Claims 1 to 5, **characterized in that** the emergency valve (24) is designed in the form of an hydraulically lockable non-return valve and is fitted so as to be automatically locking from the pressure-relief chamber (5) in the direction towards the piston-cylinder arrangements (1; 14, 15).

7. A system according to one of Claims 1 to 6, **characterized in that** the non-return valve (24) is provided with a valve seat (33) and a sealing element (34) co-operating therewith, wherein at least one piston (35, 36, 37) is guided in the housing (31) of the non-return valve so as to be displaceable and so as to act with a force upon the sealing element (34) in the closing direction and is capable of being acted upon with pressure by way of an hydraulic control inlet (26a, 27a, 28a).

8. A system according to Claim 7, **characterized in that** at least two pistons (35, 36, 37) are guided in a displaceable manner in the housing (31) of the non-return valve, wherein during its displacement at least one of the pistons (35) acts with a force upon the sealing element (34) in the closing direction, and wherein each piston is capable of being acted upon with pressure by way of an hydraulic control inlet.

9. A system according to Claim 8, **characterized in that** the pistons (35, 36, 37) are arranged in a line one behind the other, wherein one of the pistons (35) acts upon the sealing element (34) and the other pistons (36, 37) act upon the preceding pistons (35, 36) in each case.

## Revendications

1. Dispositif d'actionnement hydraulique, avec une pompe (2), qui est reliée au moyen de conduites hydrauliques (3, 4), dont une est cependant pourvue d'un clapet antiretour (7) pouvant être débloqué, avec les espaces de travail d'au moins deux dispositif piston-cylindre (1 ; 14, 15) à double effet, **caractérisé en ce que** les dispositifs piston-cylindre (1 ; 14, 15) sont reliés par une soupape de secours (24) pouvant être bloquée de façon hydraulique à un espace de détente de pression (5), **en ce qu'**au moins deux conduites de commande (26, 27, 28) partent au moins de l'une des conduites hydrauliques (3, 4) directement après la pompe (2) et d'au moins un autre endroit entre la pompe et au moins l'un des dispositifs piston-cylindre (14, 15) et sont reliées à la soupape de secours (24) automatique de telle sorte qu'un circuit OU est réalisé pour le blocage de la soupape de secours.

2. Dispositif selon la revendication 1, **caractérisé en ce que** la pompe (2) est réalisée de façon réversible et des conduites de commande (26, 27) vont des deux côtés de la pompe (2) réversible à la soupape de secours (24).

3. Dispositif selon la revendication 1 ou 2, **caractérisé en ce que** des conduites de commande (26, 27) aboutissent aux deux entrées d'une soupape à deux voies (29), une autre conduite de commande (30) allant de la sortie de cette soupape à la soupape de secours (24).

4. Dispositif selon l'une quelconque des revendications 1 ou 2, **caractérisé en ce qu'**au moins un dispositif piston-cylindre (14, 15) travaillant de façon différentielle est prévu et est relié à la pompe (2) au moyen d'au moins une soupape de commutation, une conduite de commande (28) dérivant vers la soupape de secours (24) entre la soupape de commutation (20) et le dispositif piston-cylindre (14, 15) travaillant de façon différentielle.

5. Dispositif selon l'une quelconque des revendications 1 à 4, pour une capote de véhicule, avec au moins un dispositif piston-cylindre (1) à double effet pour l'actionnement de la capote, dont les espaces de travail sont reliés chacun à un côté d'une pompe (2) réversible au moyen de conduites hydrauliques (3, 4), avec au moins un autre dispositif piston-cylindre (14, 15) pour l'actionnement de clapets de recouvrement, de serrures ou similaires de la capote, lequel autre dispositif piston-cylindre (14, 15) est activé de façon différentielle au moyen d'une conduite hydraulique (18) et d'une soupape de commutation (20), la conduite hydraulique (18) étant reliée aux deux côtés de la pompe (2) réversible, de préférence au moyen d'au moins un clapet antiretour (16, 17), **caractérisé en ce que** respectivement une conduite de commande (26, 27, 28) part des deux côtés de la pompe (2) réversible et d'un endroit entre l'espace de travail côté piston du au moins un autre dispositif piston-cylindre (14, 15) et la soupape de commutation (20) vers la soupape de secours (24).

6. Dispositif selon l'une quelconque des revendications 1 à 5, **caractérisé en ce que** la soupape de secours (24) est conçue comme un clapet antiretour pouvant être bloqué de façon hydraulique et est montée avec un blocage automatique de l'espace de détente de pression (5) en direction du dispositif piston-cylindre (1 ; 14, 15).

7. Dispositif selon l'une quelconque des revendications 1 à 6, **caractérisé en ce que** le clapet antiretour (24) est pourvu d'un siège de soupape (33) et d'un élément d'étanchéité (34) agissant conjointement avec celui-ci, au moins un piston (35, 36, 37) étant coulissant et étant guidé dans le boîtier (31) du clapet antiretour en sollicitant l'élément d'étanchéité (34) dans le sens de fermeture avec une force et pouvant être alimenté en pression au moyen d'une entrée de commande (26a, 27a, 28a) hydraulique.

8. Dispositif selon la revendication 7, **caractérisé en ce qu'**au moins deux pistons (35, 36, 37) sont guidés de façon coulissante dans le boîtier (31) du clapet antiretour, au moins un desdits pistons (35) sollicitant dans le cadre de son déplacement l'élément d'étanchéité (34) dans le sens de fermeture avec une force, et chaque piston pouvant être alimenté en pression au moyen d'une entrée de commande hydraulique.

9. Dispositif selon la revendication 8, **caractérisé en ce que** les pistons (35, 36, 37) sont disposés dans une ligne les uns derrières les autres, l'un des pistons (35) sollicitant l'élément d'étanchéité (34) et les autres pistons (36, 37) sollicitant le piston (35, 36) respectivement précédent.
